Europäisches Patentamt

European Patent Office

Office européen des brevets

(19)

(11) Veröffentlichungsnummer: **0 328 742 B1**

(12) **EUROPÄISCHE PATENTSCHRIFT**

(45) Veröffentlichungstag der Patentschrift: **08.04.92**

(21) Anmeldenummer: **88118388.3**

(22) Anmeldetag: **04.11.88**

(51) Int. Cl.⁵: **C01G 56/00**, C01G 43/00, G21C 3/62

(54) Verfahren zur Herstellung von Kernbrennstoff-Mischoxiden aus einer Nitrat-Lösung.

(30) Priorität: **18.02.88 DE 3805063**

(43) Veröffentlichungstag der Anmeldung:
**23.08.89 Patentblatt 89/34**

(45) Bekanntmachung des Hinweises auf die
Patenterteilung:
**08.04.92 Patentblatt 92/15**

(84) Benannte Vertragsstaaten:
**BE DE FR GB**

(56) Entgegenhaltungen:
**EP-A- 0 143 726**
**EP-A- 0 239 512**
**FR-A- 2 088 170**
**FR-A- 2 153 064**

(73) Patentinhaber: **KERNFORSCHUNGSZENTRUM
KARLSRUHE GMBH
Weberstrasse 5 Postfach 3640
W-7500 Karlsruhe 1(DE)**

(72) Erfinder: **Vollath, Dieter, Dr.
Primelweg 3
W-7513 Stutensee(DE)**
Erfinder: **Wedemeyer, Horst, Dr.
Kopernikusstrasse 13
W-7515 Linkenheim(DE)**
Erfinder: **Günther, Elmar
Albert-Kretz-Strasse 21
W-7513 Stutensee(DE)**

# Beschreibung

Die Erfindung betrifft ein Verfahren zur Herstellung von Kernbrennstoff-Mischoxiden aus einer Nitratlösung, die Uran in der Wertigkeitsstufe VI und weitere Metallanteile im Mengenverhältnis des herzustellenden Kernbrennstoff-Mischoxids enthält.

Unter Kernbrennstoff-Mischoxiden sollen im folgenden Mischoxide des Urans mit Plutonium und/oder Gadolinium bzw. anderen Seltenen Erden verstanden werden.

In Kernreaktoren wird aus Uran-238 das Isotop Plutonium-239 und (in Folgereaktionen) weitere Plutoniumisotope gebildet, die bei der Wiederaufarbeitung bestrahlter Kernbrennstoffe isoliert werden. Die spaltbaren Plutoniumisotope können bei der Fabrikation von neuen Brennelementen einen Teil des spaltbaren U-235 ersetzen.

Aus Reaktivitätsgründen kann es sinnvoll sein, dem Kernbrennstoff einen gewissen Anteil eines Neutronenabsorbers zuzusetzen. Als Neutronenabsorber wird hauptsächlich Gadolinium in Oxidform verwendet; jedoch sind hierfür prinzipiell auch Oxide anderer Seltenen Erden wie z. B. Europium und Samarium geeignet.

Der Neutronenabsorber gewährleistet einen gleichmäßigen Abbrand des spaltbaren Materials, so daß dessen Anteil bei der Herstellung des Kernbrennstoffs erhöht werden kann. Weil die Konzentration des Neutronenabsorbers im Kernbrennstoff bei der Neutronenbestrahlung etwa im selben Maß abnimmt wie die Konzentration des spaltbaren Materials, bleibt die Reaktivität des Kernbrennstoffs über längere Bestrahlungszeiten hinweg konstant.

Kernbrennstoff-Mischoxide müssen das spaltbare Material und den eventuell zugesetzten Neutronenabsorber in möglichst homogener Verteilung enthalten.

Diese Bedingung ist am besten erfüllt, wenn die Oxide in Form eines perfekten Mischkristalls vorliegen.

Aus der Literatur sind eine Reihe von Verfahren bekannt, nach denen Kernbrennstoff-Mischoxide hergestellt werden können (Gmelin, Band Uranium C4, 8. Auflage, Roepenack et al, Am. Ceram. Soc. Bull. 63 (1984) 1051).

Das am häufigsten angewandte Verfahren geht von einer Nitratlösung aus, in der Uran in sechswertigem, Plutonium in vierwertigem und die Seltenen Erden in dreiwertigem Zustand vorliegen.

Diese Nitratlösung wird mit Oxalsäure versetzt. Die Metallionen werden als schwerlösliche Oxalate abgetrennt und nitratfrei gewaschen. Die Oxalate werden in Wasserstoffatmosphäre geglüht, wobei sich die Oxide bilden und Uran reduziert wird.

Nachteilig sind bei diesem Verfahren die Verluste bei der Fällung und die Reduktion mit Wasserstoff bei hohen Temperaturen. Die auf diese Weise hergestellte Oxide sind sehr inhomogen und müssen deshalb durch mehrstündiges Mahlen homogenisiert werden. Weiterhin fällt als Abfall eine kontaminierte Nitratlösung an, die für die Endlagerung konditioniert werden muß.

Aus der Europäischen Anmeldung mit der Veröffentlichungsnummer 0 239 512 ist ein Verfahren bekannt, bei dem die Lösung der Nitrate eingestellt und eingedampft wird, wobei die wasserhaltigen Uranyl- und Plutonium (IV)- oder -(VI)-Nitrate zurückbleiben.

Diese Nitrate werden einer thermischen Behandlung unterzogen, an die sich gegebenenfalls eine Kalzinierung bei über 600° C anschließt.

Die so erhaltenen Oxide werden in einer Wasserdampfatmosphäre geglüht, wobei Uran zum vierwertigen Zustand reduziert wird, gegebenenfalls stabilisiert und schließlich zu Tabletten geformt und gepreßt.

Bei diesem Verfahren werden einige der oben angeführten Nachteile vermieden. Die Reduktion des Urans mit Wasserdampf bei hohen Temperaturen bleibt jedoch weiterhin notwendig und das Verfahren ist wegen der vielen Teilschritte aufwendig.

Aufgabe der vorliegenden Erfindung ist es, die Herstellung von Kernbrennstoff-Mischoxiden zu vereinfachen und insbesondere die Zahl der notwendigen Verfahrensschritte zu reduzieren. Weiterhin soll die Reduktion des Urans mit Hilfe von Wasserstoff durch einen sicherheitstechnisch günstigeren Verfahrensschritt ersetzt werden. Das Verfahren soll die Herstellung eines feinteiligen, gut sinterfähigen Pulvers ermöglichen, das aus nahezu perfekten Mischkristallen besteht, gut rieselfähig ist und nicht zum Agglomerieren neigt.

Die Aufgabe wird erfindungsgemäß dadurch gelöst, daß

a) Uran (VI) durch teilweise elektrolytische Reduktion auf eine mittlere Wertigkeit von 4,4 ± 0,2 gebracht wird, wobei die Lösung bei Bedarf mit Zusätzen wie Harnstoff oder Hydrazin stabilisiert wird,

b) die so erhaltene Lösung mit Hilfe eines zuvor auf eine Temperatur von etwa 500° C bis 800° C erhitzten Gases durch eine Düse in eine beheizbare, in mehrere Heizzonen unterteilte Vorrichtung versprüht wird, wobei in einer ersten Zone das Lösungsmittel verdampft wird, in einer zweiten Zone die Denitrierung und zumindest teilweise Kalzinierung bei einer Temperatur der einzelnen Pulverteilchen zwischen 700° C bis 1000° C durchgeführt wird und das entstehende Mischoxid in einer dritten Zone bei einer Temperatur zwischen 150° C und 500° C abgeschieden wird.

Der wesentliche Vorteil der Erfindung besteht darin, daß das Uran nicht im festen Zustand, sondern bereits in der Lösung reduziert wird. Die sicherheitstechnisch problematische Reduktion des Urans bei hohen Temperaturen durch Wasserstoff wird durch eine elektrolytische Reduktion ersetzt, wodurch sich das Störfallrisiko wesentlich vermindert. Das Verfahren wird vereinfacht, weil einige der bisherigen Verfahrensschritte zusammengefaßt werden.

Plutonium liegt in Nitratlösungen im allgemeinen in der Wertigkeitsstufe IV, die Seltenen Erden in der Wertigkeitsstufe III vor. Diese Oxidationsstufen müssen bei dem erfindungsgemäßen Verfahren nicht verändert werden. Die Anwesenheit von Pu III stört nicht. In Schritt a) wird Uran elektrolytisch auf eine mittlere Wertigkeit von 4,4 ± 0,2 gebracht. Eine Stabilisierung der Lösung ist dann notwendig, wenn die Lösung nicht unmittelbar danach entsprechend Schritt b) weiterverarbeitet wird oder wenn die mittlere Wertigkeit deutlich unter 4,4 liegt. Die Reduktion auf eine Wertigkeit von etwa 4,0 ist zu vermeiden, da feinteiliges $UO_2$ pyrophor ist.

Im Schritt b) wird die Lösung gleichzeitig eingedampft, denitriert und kalziniert, wobei sich die oxidischen Mischkristalle bilden. Das Verfahren und eine Vorrichtung nach Schritt b) sind Gegenstand der deutschen Patentanmeldung DE-A-37 19 825. Dieses Verfahren und diese Vorrichtung sind in besonderer Weise geeignet, die erwähnten Mischkristalle in Form eines feinteiligen Pulvers mit einem Korndurchmesser-Spektrum von ca. 0,1 bis 5 μm auszubilden. Durch die Anwendung des Heißgases während des Versprühens der Lösung wird eine sehr rasche Trocknung der Flüssigkeit und u. U. eine zumindest teilweise Denitrierung erreicht. In der nachfolgenden Heizzone höherer Temperatur werden dann die Trockenrückstandspartikel aus der ersten Heizzone zumindest teilweise kalziniert. Auf diese Weise werden Pulverpartikel mit einer Teilchengröße von 0,1 bis ca. 5 μm erhalten, die in der Abscheidezone abgekühlt und aus der Vorrichtung ausgetragen werden.

Der Schritt b) kann auch mit einer Suspension durchgeführt werden, so daß Ausfällungen nicht stören.

Die Erfindung wird anhand des folgenden Beispiels näher erläutert:

Beispiel:

Herstellung eines Kernbrennstoff-Mischoxids, das Uran und Gadolinium enthält.

Eine Ausgangslösung von Uranylnitrat $UO_2(NO_3)_2$ wird mit der gewünschten Menge einer Gd-$(NO_3)_3$-Lösung vermischt. Der Salzgehalt soll 50 bis 200 g/l betragen. Die Lösung wird in einer Elektrolysezelle gefüllt, die mit plattenförmigen Graphitelektroden ausgerüstet ist. Das sechswertige Uran wird bei einer Spannung von 5 Volt und einer Stromstärke von 2 A auf eine mittlere Wertigkeit von 4,4 reduziert.

Die Lösung wird mit Hilfe eines Heißgases von 600° C und eines Sprühgases von 20° C mit einem Durchsatz von ca. 0,8 l/h in die Vorrichtung versprüht. Die Ofenheizung ist auf 1000° C eingestellt. Das Produkt ist ein feinteiliges Pulver mit einer Teilchengröße von 0,1 bis 5 μm. Die Kristalle weisen eine Fluorit-Struktur auf.

## Patentansprüche

1. Verfahren zur Herstellung von Kernbrennstoff-Mischoxiden aus einer Nitrat-Lösung, die Uran in der Wertigkeitsstufe VI und weitere Metallanteile im Mengenverhältnis des herzustellenden Kernbrennstoff-Mischoxids enthält, dadurch gekennzeichnet, daß
   a) Uran (VI) durch teilweise elektrolytische Reduktion auf eine mittlere Wertigkeit von 4,4 ± 0,2 gebracht wird, wobei die Lösung bei Bedarf mit Zusätzen wie Harnstoff oder Hydrazin stabilisiert wird,
   b) die so erhaltene Lösung mit Hilfe eines zuvor auf eine Temperatur von etwa 500° C bis 800° C erhitzten Gases durch eine Düse in eine beheizbare, in mehrere Heizzonen unterteilte Vorrichtung versprüht wird, wobei in einer ersten Zone das Lösungsmittel verdampft wird, in einer zweiten Zone die Denitrierung und zumindest teilweise Kalzinierung bei einer Temperatur der einzelnen Pulverteilchen zwischen 700° und 1000° C durchgeführt wird und das entstehende Mischoxid in einer dritten Zone bei einer Temperatur zwischen 150° C und 500° C abgeschieden wird.

## Claims

1. Method of producing nuclear fuel mixed oxides from a nitrate solution containing uranium in the valency state VI and additional metal portions in the proportion of the nuclear fuel mixed oxide to be produced, characterised in that
   a) uranium (VI) is brought to an average valency of 4.4 ± 0.2 by partial electrolytic reduction, the solution being stabilised, when required, with additions such as urea or hydrazine,
   b) the solution, thus obtained, is sprayed through a nozzle into a heatable device, which is divided into a plurality of heating zones, by means of a gas previously heated to a temperature of from about 500° C to 800° C, the solvent being evaporated in a first zone, the denitration and a least partial calcination being effected at a temperature of the individual powder particles of between 700° C and 1000° C, and the resultant mixed oxide being precipitated in a third zone at a temperature of between 150° C and 500° C.

**Revendications**

1. Procédé de préparation d'oxydes mixtes pour combustible nucléaire à partir d'une solution de nitrate, qui contient de l'uranium au degré de valence VI et d'autres parties de métaux dans le rapport quantitatif de l'oxyde mixte pour combustible nucléaire à préparer, caractérisé en ce que :

   a) l'uranium (VI) est amené par une réduction partiellement électrolytique à une valence moyenne de 4,4 ± 0,2, la solution étant au besoin stabilisée par des additifs comme l'urée ou l'hydrazine.

   b) la solution ainsi obtenue est pulvérisée par un injecteur dans un dispositif chauffable, subdivisé en plusieurs zones de chauffe, au moyen d'un gaz chauffé au préalable à une température d'environ 500° C à 800° C, dispositif dans lequel dans une première zone, le solvant est vaporisé, dans une deuxième zone a lieu la dénitration et au moins partiellement la calcination à une température des particules individuelles de poudre comprise entre 700° C et 1 000° C et dans une troisième zone l'oxyde mixte résultant est séparé à une température comprise entre 150° C et 500° C.